# EUROPEAN PATENT SPECIFICATION

(11) **EP 2 561 120 B1**
(45) Date of publication and mention of the grant of the patent: **14.06.2017**
(21) Application number: 11716660.3
(22) Date of filing: 07.04.2011
(51) Int. Cl.: C25B 1/00, C01B 32/50

(54) **BEVERAGE CARBONATOR AND METHOD FOR PRODUCING SUCH CARBONATED BEVERAGE**
GETRÄNKEKARBONATOR UND VERFAHREN ZUR HERSTELLUNG EINES SOLCHEN KOHLENSÄUREGETRÄNKS
SATURATEUR DE BOISSONS ET PROCÉDÉ DE PRODUCTION D'UNE TELLE BOISSON GAZEUSE

(30) Priority: 22.04.2010 EP 10160758
(43) Date of publication of application: 27.02.2013
(73) Proprietor: Koninklijke Philips N.V., 5656 AE Eindhoven (NL); Philips Intellectual Property & Standards GmbH, 20099 Hamburg (DE)
(72) Inventor: GOTTENBOS, Bart, NL-5656 AE Eindhoven (NL); GREUEL, Georg, 52066 Aachen (DE); RONDA, Cornelis Reinder, NL-3508 TA Utrecht (NL); NOTTEN, Petrus Henricus Laurentius, NL-5656 AE Eindhoven (NL)
(74) Representative: Coops, Peter
(86) International application number: PCT/IB2011/051491
(87) International publication number: WO 2011/132101

(56) References cited:
- WO-A1-00/25904
- DE-C1- 3 727 630
- JP-A- 2003 145 161
- JP-A- 2008 006 336
- US-A- 5 460 846
- M. KANEKO, J. NEMOTO, H. UENO, N. GOKAN, K. OHNUKI, M. HORIKAWA, R. SAITO, T. SHIBATA: "Photoelectrochemical reaction of biomass and bio-related compounds with nanoporous TiO2 film photoanode and O2-reducing cathode", ELECTROCHEMISTRY COMMUNICATIONS, vol. 8, 18 January 2006 (2006-01-18), pages 336-340, XP000002656817, cited in the application
- N. SERPONE: "Is the band gap of pristine TiO2 narrowed by anion- and cation-doping of titanium dioxide in second-generation photocatalysts?", JOURNAL OF PHYSICAL CHEMISTRY B, vol. 110, 7 November 2006 (2006-11-07), pages 24287-24293, XP000002656818, cited in the application

## Description

### FIELD OF THE INVENTION

The invention relates to a beverage carbonator as well as to a method for producing a carbonated beverage.

### BACKGROUND OF THE INVENTION

Many people like to drink sparkling water and buy for instance bottles of sparkling water for this purpose. Methods for carbonating beverages and beverage carbonators that can be used for such methods are known in the art.

For instance, EP-0919518 describes a carbonator to produce carbonated beverages, e.g. syrup mixed with carbonated water is provided. The carbonator comprises means for retaining a first liquid to be carbonated, said retaining means essentially comprising a closed tank having associated an entry for said first liquid and an associated exit for said first liquid when carbonated; means for admitting carbon dioxide gas under pressure into said retaining means; pump means for said first liquid located within said retaining means, said pump means having drive means located externally of said retaining means, said pump means being driven via a magnetic coupling between the pump means and the drive means; a reservoir in which said retaining means is located, said reservoir being adapted to hold a second liquid which surrounds at least part of said retaining means; and agitation means located below the retaining means for agitating said second liquid, said agitation means being directly connected with the said drive means.

WO-2003/064314 describes a water dispenser. The water dispenser comprises a water supply conduit that is connected with a water source, a first and a second tank that store water supplied from the water supply conduit, a CO₂ tank, sparkling water tank, cooling pipe that winds the first tank, the second tank and the CO₂ tank, water outlet means, a first water outlet conduit that extends to the water outlet means from the second tank, and a second water outlet conduit that extends to the water outlet means from the second tank. The CO₂ tank is disposed near at least one of the first tank and the second tank. According to WO-2003/064314, the amount of water that can be supplied increases and the cooling effectiveness of the CO₂ tank also improves.

US-5,460,846 describes a carbonator for providing a carbonated beverage comprising:
- a carbon dioxide gas generation chamber using a carbon dioxide generating chemical,
- a water canister,
- a pressure relief valve.

In this beverage carbonator, carbon dioxide is produced by releasing internally stored water from the water canister into the carbon dioxide generating chemical in the gas generation chamber and then the carbon dioxide passes into the carbonation chamber where it is disolved into a liquid beverage.

WO-00/25904 describes an apparatus for the carbonation of a liquid. The method for carbonating a liquid of this document does not generate carbon dioxide but uses a carbon dioxide source of pressurised carbon dioxide.

### SUMMARY OF THE INVENTION

To produce sparkling water (e.g. at home and at offices) currently liquid CO₂ cylinders are needed, which may be expensive and cumbersome to obtain. CO₂ cylinders may for instance nowadays cost about € 10,- for 60 l sparkling water, and € 20,- rent for the cylinder. Further, they are not generally available in supermarkets. Also the apparatuses working with such cylinders may need expensive steel materials which can work at 60 bar pressure (typical apparatus costs € 80,-). Moreover, customers sometimes complain about the taste of sparkling water produced in such equipment. Further, such systems may require a relatively large amount of energy.

Hence, it is an aspect of the invention to provide an alternative method to provide a carbonated beverage and/or a beverage carbonator that can be used for such method, which preferably further at least partly obviate one or more of above-described drawbacks. According to a first aspect, the invention provides a beverage carbonator ("apparatus") comprising (1) a CO₂ generation unit comprising a photo electrochemical cell arranged to convert an organic compound in a first liquid comprising the organic compound under influence of light into at least CO₂ and to produce a CO₂ comprising gas, (2) a pressure regulator arranged to pressurize the CO₂ comprising gas, and (3) a mixing chamber for mixing the CO₂ comprising gas under pressure into a second liquid to provide the carbonated beverage. The photo electrochemical cell is especially a cell that under influence of light, i.e. photo catalytically, can convert organic compounds into CO₂.

In a further aspect, the invention provides method ("method" or "process") for producing a carbonated beverage comprising photo electrochemically converting an organic compound in a first liquid into at least CO₂ to produce a CO₂ comprising gas and mixing the CO₂ comprising gas under pressure into a second liquid to provide the carbonated beverage. Especially, in this method the beverage carbonator as described herein may be applied.

The present invention enables the use of readily available organic carbon sources, such as glucose syrup, as the source of CO₂, making the use costs of such an apparatus much lower. The invention especially uses a photo electrochemical cell, in which for example such organic compound like glucose can be converted into CO₂. At one electrode ("anode") of the cell photons are absorbed by a semiconducting material and conduction band electrons and valence band holes are formed which can oxidize, for example, glucose to CO₂. The electrons generated by the photo conversion process are transported to the second electrode ("cathode") in the cell where they react with oxygen to give water. In this photo-induced process electricity is generated, which can (partly) be used to drive the apparatus.

For instance, 1 kg of sugar can easily deliver enough CO₂ to create 200 l of sparkling water (1 kg saccharose (C₁₂H₂₂O₁₁) is 2.92 mol, and can be oxidized to 35 mol, or 1543 g of CO₂. Strongly carbonated water contains about 6 g/l CO₂, so with about 1 kg sugar 257 l sparkling water can be made). The CO₂ content may be customized, as it is well-known that people have different tastes with respect to the gas (bubble) content. The price for sparkling water may hereby essentially go down. Moreover the apparatus could be designed to work at low pressure, not requiring expensive high pressure materials.

The term beverage, or drink, is a liquid which is specifically prepared for human consumption. The term "beverage" may not refer to water per se, but in this invention, carbonated water (sparkling water) is considered a beverage. Examples of beverages are amongst others a cola, a sparkling water, an ice tea, a lemonade, a squash, a fruit punch, a hot chocolate, a hot tea, a hot coffee, a milk, a milkshake, a wine, a beer, a root beer, an orange soda, a grape soda, a cream soda, and a ginger ale. Hence, the term "beverage" may refer to amongst others an alcoholic beverage, a non-alcoholic beverage and a soft drink. The carbonated beverages that can be produced with the apparatus and method of the invention are preferably consumed cold, such as a cola, a sparkling water, an ice tea, a lemonade, a squash, a fruit punch, a wine, a beer, an orange soda, a grape soda, a cream soda, and a ginger ale. Especially, the beverage herein is not a dairy-based beverage. Hence, preferably, the second liquid is a beverage or a beverage precursor. Examples of beverage precursors are water or a cola mixture that are converted into a beverage by introducing CO₂ into the beverage precursor (to provide a sparkling water and a cola, respectively). In a specific embodiment, the second liquid is water, especially thus non-sprinkling water, such as tap water, non-sprinkling mineral water, demineralized water, etc.

A specific aspect of the invention is the use of the photo electrochemical cell to generate CO₂ and electricity locally. Especially, the photo electrochemical cell is a nano-TiO₂ based photo electrochemical cell. As known in the art, dyes may be used to sensitize the nano-TiO₂ (Graetzel cell type). Also other semiconducting materials such as ZnO or CdS may be applied. Such photo electrochemical cells may in principle also be used for environmental remediation, i.e. water and wastewater clean-up, air pollution abatement and disinfection, since they are able to remove organic compounds, as it is applied herein to generate CO₂. It is for instance referred to Masao Kaneko et al., "Photoelectrochemical reaction of biomass and bio-related compounds with nanoporous TiO2 film photoanode and O2-reducing cathode", Electrochemistry Communications, 8 (2006) 336.

Advantageously, with the apparatus and method of the invention, at the same time CO₂ and electricity is generated. The CO₂ and electricity is generated by providing the first liquid to the photo electrochemical cell and irradiating (for instance with solar light and/or with artificial light) the cell, especially the anode. At least part of the CO₂ is introduced in the second liquid, and at least part of the electricity may be used to drive the apparatus.

The electricity generated indoor may not be enough to drive the whole apparatus. Hence, the apparatus may derive electricity from an additional source of electrical energy, such as an internal or external source of electrical energy. In an embodiment, the beverage carbonator may further comprise a light source (artificial light source) arranged to provide at least part of the light required by the photo electrochemical cell.

In an embodiment, a (UV) lamp is added to the apparatus which generates light in order to drive the electrochemical photo-reaction. This lamp can be fed by the mains or by a (rechargeable) battery. When the apparatus relies on incoming daylight the apparatus might fully operate itself (pumps, etc.) by the generated electricity.

Therefore, the method of the invention may further comprise providing light of a light source, such as a (UV) lamp, to the photo electrochemical cell. Visible light may (also) be used to drive the photo electrochemical cell. For example nitrogen-doped TiO₂ may be applied as semiconductor that can execute the conversion of the organic compound into CO₂ under influence of visible light, but also other dopants in TiO₂ can have this effect (see for instance Nick Serpone, "Is the Band Gap of Pristine TiO2 Narrowed by Anion and Cation Doping of Titanium Dioxide in Second-Generation Photocatalysts", J. Phys. Chem. B, 2006, 110 (48), 24287-24293).

Optionally or additionally, the method may further comprise providing solar light to the photo electrochemical cell. For instance, a solar concentrator may be applied to concentrate solar light and provide this solar light, optionally via other optical means such as one or more of a lens, a mirror and a mirror, to the photo electrochemical cell.

Hence, in an embodiment the beverage carbonator comprises an electronic component (such as pump, an electronic valve, a control unit, a cooling element, etc.), wherein the photo electrochemical cell is arranged to provide at least part of the electricity required by the electronic component.

The following reactions may take place in the cell, with glucose as example. The first step is the absorption of light by the semiconducting electrode according to

h*v* → h⁺ + e⁻, (1)

generating holes (h⁺) in the Valence Band (VB, blue) and electrons in the Conduction Band (CB, red). The next step is that glucose is oxidized by the VB-holes according to

C₆H₁₂O₆ + 6H₂O + 24h⁺ → CO₂ + 24H⁺. (2)

The CB-electrons are transported to the second electrode at which oxygen will be reduced according to

6O₂ + 24H⁺ + 24e⁻ → 12H₂O. (3)

The overall reaction being

C₆H₁₂O₆ + 6O₂ → 6CO₂ + 6H₂O. (4)

The second reaction is catalyzed using photo-catalysis. The electrode may for instance be coated with a photo catalyst, for example, titanium dioxide, and may be irradiated with the appropriate light source (UV for titanium dioxide), e.g. a UV LED or other wavelengths when other semiconductors are applied to activate the photo catalyst. Electrons and holes will be generated, where the holes will oxidize either glucose or another organic compound directly, or with intermediate hydroxyl radicals. The electrons will be transported to the cathode where they convert oxygen with protons from the liquid to water.

In order to improve the cathode reaction, air can be mixed with the liquid at the cathode side, for example by blowing in air bubbles. Hence, the method also includes providing an oxygen comprising gas to the cathode, such as by bubbling air in the liquid at the cathode side.

To further improve electric current yield, anode and cathode may be separated with a selective membrane, preventing oxygen to move to the anode, but allowing H₃O⁺ ions to move freely through the membrane. Especially, the photo electrochemical cell comprises a membrane, arranged to provide an anode compartment (e⁻/H⁺/CO₂ generation) and a cathode compartment (e⁻/H⁺/ consumption), wherein the membrane is a proton exchange membrane.

It should be noted that for the electrochemical oxidation of glucose into CO₂ 24 charge carriers are required and hence that this reaction can be much more complex than here indicated. For example, it might be expected that current doubling processes are involved so that the initial oxidation indeed takes place via the VB but that the as-prepared intermediates can directly inject holes into the CB of the semiconducting electrode.

Above, glucose has been used as example. However, alternatively or additionally, also other organic compounds may be applied. The organic compound can be any compound that is available as liquid at temperatures in the range of about 5-50 °C or that can be included in a liquid carrier, preferably dissolved, and which further can photo electrochemically be converted into CO₂ (and other compounds, such as for instance H₂O). The term "organic compound" may also refer to a plurality of organic compounds. Hence, the first liquid may also comprise a combination of different organic compounds.

In a specific embodiment, the first liquid comprises a saccharide as organic compound. Herein a saccharide refers to one or more of a monosaccharide, a disaccharide or an oligosaccharide.

The monosaccharide is preferably selected from the group consisting of an aldose and a ketose. In an embodiment, the organic comprises one or more of glucose and fructose. The disaccharide is preferably selected from the group consisting of sucrose, lactulose, lactose, and maltose. In an embodiment, the organic comprises one or more of sucrose (saccharose) and lactose. The oligosaccharide is preferably selected from the group consisting of trisaccharides, tetrasaccharides and pentasaccharides, such as maltotriose.

Preferably, glucose and/or fructose and/or sucrose and/or lactose are selected as organic compound(s). Especially, the first liquid comprises one or more of glucose and saccharose (sucrose) as organic compound(s). Hence, as first liquid, for instance sugar syrup may be applied. The first liquid is preferably water based. In an embodiment, the first liquid is water, wherein the organic compound is dissolved.

The apparatus may be driven continuously or batch-wise. Likewise, the method may be executed continuously or batch-wise.

In an embodiment, the CO₂ generation unit is arranged to continuously generate CO₂ from the first liquid.

Further, the beverage carbonator may comprise a CO₂ storage chamber, i.e. a chamber wherein the CO₂ comprising gas can be stored (temporarily). The storage chamber may be used to store CO₂ under pressure, which may facilitate a later introduction of the CO₂ in the second liquid. The term "CO₂ comprising gas" will in general relate to air enriched with CO₂, but may in a specific embodiment also relate to substantially pure CO₂. In an embodiment, the beverage carbonator is arranged to store CO₂ in a liquid state. Hence, the invention may further comprise storing the CO₂ comprising gas under pressure (as gas or as liquid).

In addition to CO₂, also other components may be added to the second liquid, such as a flavor, a colorant, a sugar, a mineral, etc. Hence, in a specific embodiment, the beverage carbonator may further comprise a dosage unit arranged to provide a further compound ("additive") to the second liquid or the carbonated beverage, and wherein the further compound is preferably selected from the group consisting of a flavor, a tastant, a colorant, a sugar and a mineral. Likewise, the method may thus further include providing such further compound to the second liquid or the carbonated beverage. The mineral content can be adjusted, to the customer's needs, f.i. for wellness or health applications. Also the content of other additives, such as the flavour, colorant and sugar may be adjusted to the desire of the consumer. Sugars and minerals that may influence the taste may be considered tastants. As will be clear to the person skilled in the art, the invention also includes embodiments wherein one or more additives are added to the second liquid and one or more (other) additives are added to the carbonated beverage.

Additional features can be added to the apparatus, such as a cooling element and/or a water purification unit (e.g. UV disinfection, ion removal, pollutants removal).

An interesting add-on could be the removal of pollutants with hydrogen peroxide + UV. Hydrogen peroxide could be generated in the photo-electrochemical cell, by using a different type of catalyst at the cathode, creating the reactions:

C₆H₁₂O₆ + 6H₂O + 24h⁺ → CO₂ +12H⁺

12O₂ + 24H⁺ + 24e⁻ → 12H₂O₂

C₆H₁₂O₆ + 6O₂ → 6CO₂ + 12H₂O₂ (5)

Again, by way of example, glucose is used as organic compound. However, also other organic compounds may be applied as well.

The hydrogen peroxide could then also be stored, or immediately used to treat the water if the second liquid, such as water, that may already present in the apparatus. H₂O₂ is generated at the cathode side. Hence, the organic compound containing liquid can be used at the anode side and for instance water can be used at the cathode side. At the same time CO₂ is generated, water may be "treated" at the cathode side. This treated water may (later) be used as potable water and CO₂ may be introduced to this water in order to form a sparkling water as beverage.

Hence, before production of the carbonated beverage, the second liquid may be purified. The second liquid may be treated by H₂O₂ and/or UV light, in order to destroy undesired species such as bacteria, virus, and organic compounds. In a specific embodiment, the beverage carbonator may therefore comprise a photo electrochemical cell arranged to also generate H₂O₂, and the method may further comprise a purification of the second liquid with H₂O₂, preferably prior to mixing the CO₂ comprising gas under pressure into the second liquid. Hence, this H₂O₂ is applied to treat the second liquid. Hence, in an embodiment the method may further comprise a purification of the second liquid with H₂O₂. Optionally, the H₂O₂ containing liquid thus formed may be used to purify the second liquid. Hence, in an embodiment, the second liquid is used to generate H₂O₂ in, and in another embodiment, a H₂O₂ containing liquid is used to treat the second liquid.

Alternatively or additionally, the second liquid may also be treated with UV light. The combined treatment of UV and H₂O₂ is also indicated as "advanced oxidation". The treatment of the second liquid will in general be performed prior to CO₂ introduction. Before CO₂ introduction, the (purified) liquid may also be subjected to a filtration. This filtration may be applied to remove undesired compounds, such as organic compounds (for instance residues from the purification treatment with H₂O₂ and/or UV light) from water or another second liquid. Hence, in an embodiment the method may further comprise a purification of the second liquid with H₂O₂ or with UV light or with both.

Hence, the invention provides for instance an apparatus in which sparkling water is produced, in which an organic substance is used as CO₂ source. Especially, the organic substance used is a sugar, such as glucose. In the apparatus, a photo catalyst, especially TiO₂, is used to convert the organic substance into CO₂ and H₂O. Further, in an embodiment, sugar and/or flavors and/or minerals may be added to the sparkling water. The amount of CO₂ and optionally additives such as a sugar, a flavor, a mineral or a colorant, added can be adjusted by the consumer.

Optionally, light may be generated by a UV light source, e.g. an LED, to run the photo-electrochemical cell. In an embodiment, a visible light active photo catalyst is used, such as nitrogen-doped TiO₂. Hence, in a further embodiment, light may be generated by a visible light source, e.g. an LED, to drive the photo-electro chemical cell. Even, ambient light may be used to activate the photo catalyst of the photo electrochemical cell. Ambient light may be used solely or in combination with light of a light source such as a (UV) LED. Further, the apparatus may be provided with a (water) purification function.

As will be clear to the person skilled in the art, also a stack of photo electrochemical cells may be applied. The term "a photo electrochemical cell" may in an embodiment also relate to a stack of photo electrochemical cells or to a plurality of photo electrochemical cells.

### BRIEF DESCRIPTION OF THE DRAWINGS

Embodiments of the invention will now be described, by way of example only, with reference to the accompanying schematic drawings in which corresponding reference symbols indicate corresponding parts, and in which:
Figures 1 schematically depicts an embodiment of the beverage carbonator;
Figures 2a-2b schematically depicts some embodiments and variants thereon of the beverage carbonator;
Figure 3 schematically depicts some possible schemes to generate the carbonated beverage; and
Figure 4 schematically depicts the principle of the photo electrochemical cell of the beverage carbonator.

### DETAILED DESCRIPTION OF THE EMBODIMENTS

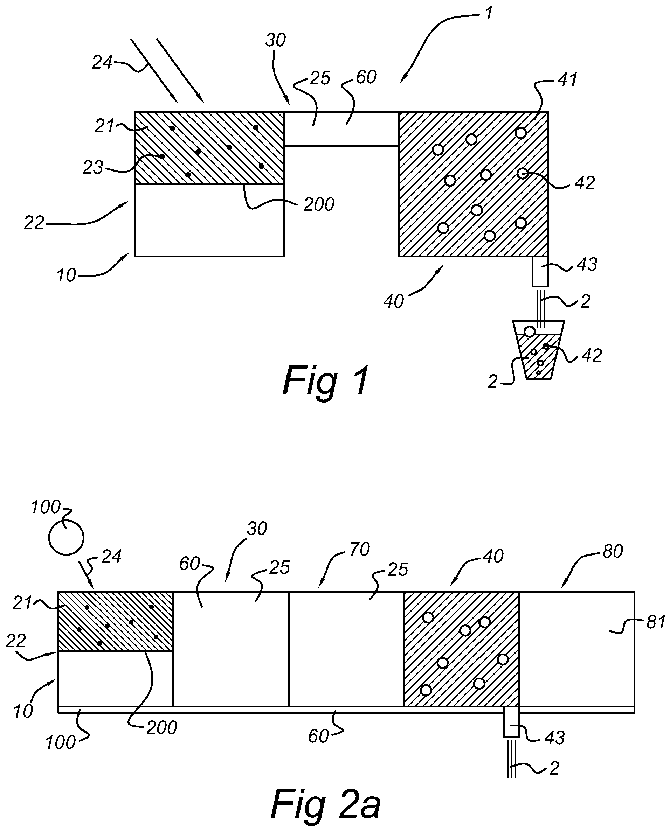

Figure 1 schematically depicts an embodiment of a beverage carbonator 1 for providing a carbonated beverage 2. The beverage carbonator 1 comprises a CO₂ generation unit 10, a pressure regulator 30, and a mixing chamber 40. The beverage carbonator 1 can be used for producing the carbonated beverage 2 by photo electrochemically converting an organic compound in a first liquid into at least CO₂ in the CO₂ generation unit 10 to produce a CO₂ comprising gas and mixing the CO₂ comprising gas under pressure, provided by the pressure regulator 30, such as a pump, into a second liquid in the mixing chamber 40 to provide the carbonated beverage 2.

The CO₂ generation unit 10 comprises a compartment for a first liquid 21 comprising an organic compound 23. The CO₂ generation unit 10 comprises a photo electrochemical cell 22 arranged to convert the organic compound 23 in the first liquid 21 under influence of light 24 into at least CO₂ and to produce the CO₂ comprising gas, indicated with reference 25.

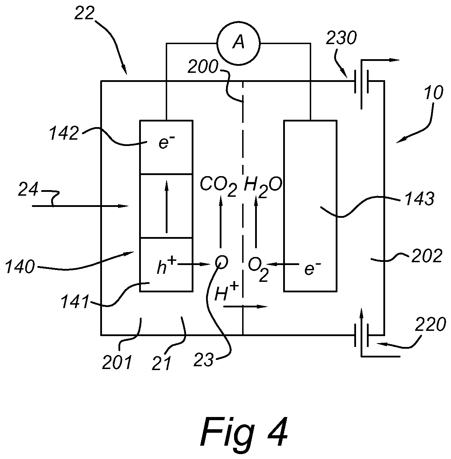

The photo electrochemical cell 22 is generally divided by a membrane 200 in an anode and cathode compartment (for further details and variants, see figure 4 and its description).

Further, the pressure regulator 30 is arranged to pressurize the CO₂ comprising gas 25. The mixing chamber 40 is arranged for mixing the CO₂ comprising gas 25 under pressure into a second liquid 41, such as water or a cola precursor, to provide the carbonated beverage 2.

The apparatus 1 may run continuously, until a predetermined amount of CO₂ is produced, like the amount needed for 1 l of sparkling water. This may reduce the size of the electrodes needed. In addition, it may easily enable adjusting the CO₂ content in the sparkling water: the gas could be mixed immediately with water, if water is in the storage tank.

To dissolve an excess of gas and create sparkling water, an elevated pressure, for example 2 bar overpressure may be required, which is generated using a pressure regulator 30, such as a pump. In alternative embodiments the CO₂ is stored as substantially pure gas, where also an elevated pressure is optimal for lower space use. Later the elevated pressure can be used to drive the mixing with the water.

For e.g. 1 l of water, 6 g of CO₂ storage is needed, which uses at 10 bar overpressure a volume of 0.3 1, a larger volume enables a lower pressure. In another alternative embodiment the CO₂ can be stored as a liquid, but this requires high pressures again (>60 bar), making the apparatus more expensive. An important feature of the apparatus can be to make the amount of CO₂ added to the water adjustable for the user. This can be controlled in many ways, for example by adjusting the mixing pressure or transporting a smaller amount of CO₂ to the mixing compartment. Optionally a pH sensor, a current integrator or a pressure sensor could be added in the apparatus to quantify the amount of dissolved CO₂ (in the second liquid 41).

Light 24 can be provided as ambient light, as solar light, as light of a light source, such as an LED, or combinations of two or more of such sources of light. The light used may be visible light or UV light or a combination of those.

In figure 1, CO₂ (in the second liquid 41) is indicated with bubbles 42. Further, by way of example, the mixing chamber 40 includes a tap 43 for release of the carbonated beverage 2. Electric parts are indicated with reference 60. For instance, the pressure regulator 30 may be driven electrically.

Figures 2a-2b schematically depict some other embodiments and variants, which may be combined with each other or with the embodiment schematically depicted in figure 1.

Figure 2a schematically depicts the same embodiment as schematically depicted in figure 1, but with some additional options. Reference 70 indicates a storage chamber, wherein the CO₂ comprising gas 25 may (temporarily) be stored. This storage chamber 70 may be used as buffer for the CO₂ comprising gas 25. In this way, mixing the CO₂ into the second liquid 41 may be performed relatively quick. The CO₂ comprising gas 25 may be stored as gas, but CO₂ may also be stored in liquid form. In both cases, the storage chamber is under pressure (by pressure regulator 30). Storage may thus happen under pressurized conditions. The pressure regulator 30 may be applied to store the CO₂ comprising gas 25 under pressure in the storage chamber 70.

Figure 2a further schematically depicts a dosage unit 80, which may be used to add additives to the second liquid and/or the carbonated beverage 2. Additives may for instance be colorants, flavors, tastants, etc. The tastant may for instance be sugar, but may also include a mineral. The additive may or may not be added, dependent upon the desires of the consumer and/or the arrangement of the beverage carbonator 1. Electronics, for instance all electronics to control the beverage carbonator 1, including an optional battery or a line to the mains, are indicated with reference 100.

Electronics 100 are also an electronic part 60, which may receive at least part of the electrical energy from the photo electrochemical cell 22.

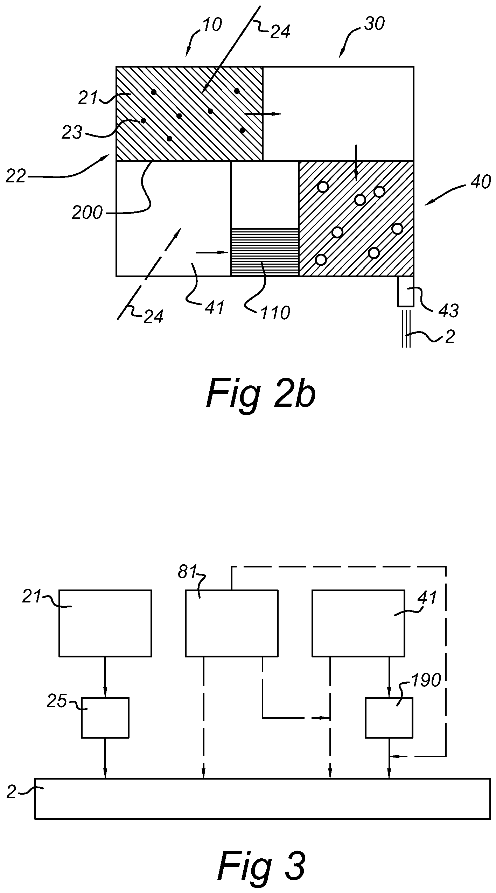

In figure 2b, an embodiment is schematically depicted wherein the electrodes (not depicted) of the photo electrochemical cell 22 from beverage carbonator 1 are separated by membrane 200, with the cathode especially adapted to generate H₂O₂ (while CO₂ is still generated at the anode). Further, the photo electrochemical cell 22 will likely use the second liquid 41 to generate H₂O₂ (see above for the reaction schemes).

The H₂O₂ formed may be used to purify the second liquid 41. The second liquid 41, especially water, may be treated with H₂O₂, to destroy for instance undesired organic compounds. Alternatively or additionally, the second liquid 41, especially water, may also be treated with UV light (indicated with reference 24 (dashed arrow), and here at least including UV light). Optionally, the treated second liquid 41 may be filtered with a filtration unit 110, to provide a treated and filtrated second liquid 41 to the mixing chamber 40. In the mixing chamber 40, the (treated) second liquid 41 is provided with the CO₂ comprising gas 25 via pressure regulator 30, and here optionally also other components may be added to the second liquid 41, such as flavors or colorants, to provide the sparkling beverage 2.

Figure 3 schematically depicts some schemes to generate the carbonated beverage 2. On the left hand, first liquid 21 is at least partly converted into the CO₂ comprising gas 25. This gas is combined with second liquid 41 to provide the carbonated beverage 2. Second liquid 41 may either be directly combined with the CO₂ comprising gas 25, but may optionally also first be subjected to a purification process 190, including H₂O₂ and/or UV treatment, and an optional filtering (see also above). Further, optionally additives 81 may be introduced in the carbonated beverage 2, or the second liquid 41 or in the purified second liquid (or in both).

Figure 4 schematically depicts the CO₂ generation unit 10 with the photo electrochemical cell 22. The photo as schematically depicted in figure 4 and as further described below may be applied in the embodiments schematically depicted in figures 1-3, and described here above.

The following reactions may take place in the cell, if driven on glucose. The first step is the absorption of light by the semiconducting electrode 140 (also indicated as anode) according to

h*v →* h⁺ + e⁻, (1)

generating holes (h⁺) in the valence band (VB, 141) and electrons in the conduction band (CB, 142). The next step is that glucose is oxidized by the VB-holes according to

C₆H₁₂O₆ + 6H₂O + 24h⁺ → 6CO₂ + 24H⁺. (2)

The CB-electrons are transported to the second electrode 143 (also indicated as cathode) at which oxygen will be reduced according to

6O₂ + 24H⁺ + 24e⁻ → 12H₂O. (3)

The overall reaction being

C₆H₁₂O₆ + 6O₂ → 6CO₂ + 6H₂O. (4)

The (semiconducting) electrode 140 may in an embodiment be coated with a photo catalyst, for example, titanium dioxide, and irradiated with the appropriate light source (UV for titanium dioxide, e.g. UV LEDs, may for instance be applied to activate the photo catalyst). Electrons and holes will be generated, where the holes will oxidize either glucose directly, or with intermediate hydroxyl or other radicals. The electrons will be transported to the cathode where they convert oxygen with protons from the liquid to water.

Preferably, the photo electrochemical cell 22 further comprises a membrane 200, dividing the photo electrochemical cell 22 in a cathode compartment and an anode compartment. Preferably, this membrane 200 is arranged to allow proton transport from the anode compartment 201 to the cathode compartment 202. Further, preferably, the membrane is a barrier for the organic material, such as glucose, and other (intermediate) reaction products that may be formed at the anode side. Preferably, the membrane is also not permeable to oxygen at the cathode side, and transport from oxygen from the cathode compartment 202 to the anode compartment 201 is inhibited or prevented. Neither is the membrane 200 preferably permeable to electrons from the cathode compartment 202 to the anode compartment 201. Hence, preferably the photo electrochemical cell 22 comprises a membrane 200, arranged to provide an anode compartment 201 and a cathode compartment 202, wherein the membrane 200 is a proton exchange membrane, especially arranged to allow protons migrate from the anode compartment 201 to the cathode compartment 202.

The liquid 21 comprising an organic compound 23 is fed to the anode compartment 201. The liquid in the anode compartment, indicated with reference 121, may be the same liquid 21 comprising an organic compound 23, i.e. the first liquid, but is preferably water (third liquid).Further, preferably the photo electrochemical cell 22 comprises an inlet 220, to provide an O₂ comprising gas, such as air, to the cathode 143. For instance, air can be bubbled into the liquid 121 in the cathode compartment 202. Gas may in an embodiment be able to escape from the cathode compartment 202 via opening 230, for instance a vent.

In a specific embodiment, the cathode 143 is especially designed to (also) generate H₂O₂. In this way, the liquid 121 in the cathode compartment 202 may be treated by H₂O₂ or may be a carrier of H₂O₂ (i.e. a H₂O₂ comprising liquid), that may be used to treat for instance the second liquid. In a preferred variant, the second liquid 41 is introduced in the cathode compartment 202 and H₂O₂ may be used, optionally in combination with to UV-treatment, to treat the second liquid 41, such as water.

The term "substantially" herein, such as in "substantially all emission" or in "substantially consists", will be understood by the person skilled in the art. The term "substantially" may also include embodiments with "entirely", "completely", "all", etc. Hence, in embodiments the adjective substantially may also be removed. Where applicable, the term "substantially" may also relate to 90% or higher, such as 95% or higher, especially 99% or higher, even more especially 99.5% or higher, including 100%. The term "comprise" includes also embodiments wherein the term "comprises" means "consists of'.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The apparatuses herein are amongst others described during operation. As will be clear to the person skilled in the art, the invention is not limited to methods of operation or apparatuses in operation.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "to comprise" and its conjugations does not exclude the presence of elements or steps other than those stated in a claim. The article "a" or "an" preceding an element does not exclude the presence of a plurality of such elements.

The invention may be implemented by means of hardware comprising several distinct elements, and by means of a suitably programmed computer. In the apparatus claim enumerating several means, several of these means may be embodied by one and the same item of hardware.

The mere fact that certain measures are recited in mutually different dependent claims does not indicate that a combination of these measures cannot be used to advantage.

## Claims

1. A beverage carbonator (1) for providing a carbonated beverage (2) comprising:
a CO₂ generation unit (10) for producing a CO₂ comprising gas (25) wherein the CO₂ comprised in the gas (25) is produced by conversion of an organic compound (23) in a first liquid (21) by a photo electrochemical cell (22) of the CO₂ generation unit (10), the cell (22) being comprised in the beverage carbonator and suitable for generating the CO₂ and electricity at the same time, in which cell (22) the organic compound (23) is converted under influence of light (24) into at least CO₂, wherein the CO₂ and the electricity is generated by providing the first liquid to the photochemical cell and irradiating the cell;
a pressure regulator (30) arranged to pressurize the CO₂ comprising gas (25); and
a mixing chamber (40) for mixing the CO₂ comprising gas (25) under pressure into a second liquid (41) to provide the carbonated beverage (2).

2. The beverage carbonator (1) according to claim 1, wherein the photo electrochemical cell is a nano-TiO₂ based photo electrochemical cell.

3. The beverage carbonator (1) according to any one of the preceding claims, wherein the beverage carbonator (1) comprises an electronic component (60), and wherein the photo electrochemical cell is arranged to provide at least part of the electricity required by the electronic component (60).

4. The beverage carbonator (1) according to any one of the preceding claims, comprising a light source (100) arranged to provide at least part of the light required by the photo electrochemical cell.

5. The beverage carbonator (1) according to any one of the preceding claims, wherein the photo electrochemical cell (22) comprises a membrane (200), arranged to provide an anode compartment (201) and a cathode compartment (202), wherein the membrane (200) is a proton exchange membrane.

6. The beverage carbonator (1) according to any one of the preceding claims, further comprising a CO₂ storage chamber (70).

7. The beverage carbonator (1) according to any one of the preceding claims, further comprising a dosage unit (80) arranged to provide a further compound (81) to the second liquid (41) or the carbonated beverage (2), and wherein the further compound (81) is preferably selected from the group consisting of a flavor, a tastant, a colorant, a sugar and a mineral.

8. The beverage carbonator (1) according to any one of the preceding claims, wherein the photo electrochemical cell (22) is arranged to generate also H₂O₂.

9. A method, wherein the beverage carbonator (1) according to any one of claim 1-8 is applied, for producing a carbonated beverage (2) comprising producing a CO₂ comprising gas (25) by conversion of an organic compound (23) in a first liquid (21) by a photo electrochemical cell (22), the cell (22) being suitable for generating the CO₂ and electricity at the same time, in which cell (22) the organic compound (23) is converted under influence of light (24) into at least CO₂, wherein the CO₂ and the electricity is generated by providing the first liquid to the photochemical cell and irradiating the cell; and mixing the CO₂ comprising gas (25) under pressure into a second liquid (42) to provide the carbonated beverage (2).

10. The method according to any one of claims 9-10, wherein the first liquid comprises a saccharide as organic compound, preferably one or more of glucose and saccharose.

11. The method according to any one of claims 9-11, wherein the second liquid is water.

12. The method according to any one of claims 9-12, further comprising providing light of a light source to the photo electrochemical cell.

13. The method according to any one of claims 9-13, further comprising storing the CO₂ comprising gas under pressure.

14. The method according to any one of claims 9-14, wherein the method further comprises a purification of the second liquid with H₂O₂, prior to mixing the CO₂ comprising gas under pressure into the second liquid.

## Patentansprüche

1. Getränkekarbonisierer (1) zum Bereitstellen eines kohlensäurehaltigen Getränks (2), der Folgendes umfasst:
eine CO₂-Erzeugungseinheit (10) zum Erzeugen eines CO₂ enthaltenden Gases (25), wobei das CO₂, das in dem Gas (25) enthalten ist, durch Umwandlung einer organischen Verbindung (23) in eine erste Flüssigkeit (21) durch eine fotoelektrochemische Zelle (22) der CO₂-Erzeugungseinheit (10) erzeugt wird, wobei die Zelle (22) in dem Getränkekarbonisierer enthalten ist und zum Erzeugen des CO₂ und von Elektrizität gleichzeitig geeignet ist, wobei die organische Verbindung (23) in der Zelle (22) unter dem Einfluss von Licht (24) in mindestens CO₂ umgewandelt wird, wobei das CO₂ und die Elektrizität durch Bereitstellen der ersten Flüssigkeit zu der fotochemischen Zelle und Bestrahlen der Zelle erzeugt werden,
einen Druckregler (30), der eingerichtet ist, um das CO₂ enthaltende Gas (25) mit Druck zu beaufschlagen, und
eine Mischkammer (40) zum Mischen des CO₂ enthaltenden Gases (25) unter Druck in eine zweite Flüssigkeit (41), um das kohlensäurehaltige Getränk (2) zu liefern.

2. Getränkekarbonisierer (1) nach Anspruch 1, wobei die fotoelektrochemische Zelle eine fotoelektrochemische Zelle ist, die auf TiO₂ basiert.

3. Getränkekarbonisierer (1) nach einem der vorhergehenden Ansprüche, wobei der Getränkekarbonisierer (1) ein elektronisches Bauteil (60) umfasst, und wobei die fotoelektrochemische Zelle eingerichtet ist, um mindestens einen Teil der Elektrizität, die das elektrische Bauteil (60) benötigt, zu liefern.

4. Getränkekarbonisierer (1) nach einem der vorhergehenden Ansprüche, der eine Lichtquelle (100) umfasst, die eingerichtet ist, um mindestens einen Teil des Lichts zu liefern, das die fotoelektrochemische Zelle benötigt.

5. Getränkekarbonisierer (1) nach einem der vorhergehenden Ansprüche, wobei die fotoelektrochemische Zelle (22) eine Membran (200) umfasst, die eingerichtet ist, um eine Anodenkammer (201) und eine Kathodenkammer (202) bereitzustellen, wobei die Membran (200) eine Protonenaustauschmembran ist.

6. Getränkekarbonisierer (1) nach einem der vorhergehenden Ansprüche, der ferner eine CO₂-Speicherkammer (70) umfasst.

7. Getränkekarbonisierer (1) nach einem der vorhergehenden Ansprüche, der ferner eine Dosiereinheit (80) umfasst, die eingerichtet ist, um eine weitere Verbindung (81) zu der zweiten Flüssigkeit (41) oder zu dem kohlensäurehaltigen Getränk (2) zu liefern, und wobei die weitere Verbindung (81) bevorzugt aus der Gruppe ausgewählt ist, die aus einem Aroma, einem Geschmacksstoff, einem Farbstoff, einem Zucker und einem Mineralstoff besteht.

8. Getränkekarbonisierer (1) nach einem der vorhergehenden Ansprüche, wobei die fotoelektrochemische Zelle (22) eingerichtet ist, um auch H₂O₂ zu erzeugen.

9. Verfahren bei dem der Getränkekarbonisierer (1) nach einem der Ansprüche 1 bis 8 angewandt wird, um ein kohlensäurehaltiges Getränk (2) zu erzeugen, das das Erzeugen eines CO₂ enthaltenden Gases (25) durch Umwandlung einer organischen Verbindung (23) in eine erste Flüssigkeit (21) durch eine fotoelektrochemische Zelle (22) umfasst, wobei die Zelle (22) geeignet ist, CO₂ und Elektrizität gleichzeitig zu erzeugen, wobei die organische Verbindung (23) in der Zelle (22) unter dem Einfluss von Licht (24) in mindestens CO₂ umgewandelt wird, wobei das CO₂ und Elektrizität erzeugt werden, indem die erste Flüssigkeit zu der fotochemischen Zelle geliefert wird und die Zelle bestrahlt wird, und Mischen des CO₂ enthaltenden Gases (25) unter Druck in eine zweite Flüssigkeit (42), um das kohlensäurehaltige Getränk (2) zu liefern.

10. Verfahren nach einem der Ansprüche 9 bis 10, wobei die erste Flüssigkeit ein Saccharid als organische Verbindung umfasst, bevorzugt Glukose und/oder Saccharose.

11. Verfahren nach einem der Ansprüche 9 bis 11, wobei die zweite Flüssigkeit Wasser ist.

12. Verfahren nach einem der Ansprüche 9 bis 12, das ferner das Bereitstellen von Licht einer Lichtquelle zu der fotoelektrochemischen Zelle umfasst.

13. Verfahren nach einem der Ansprüche 9 bis 13, das ferner das Speichern des CO₂ enthaltenden Gases unter Druck umfasst.

14. Verfahren nach einem der Ansprüche 9 bis 14, wobei das Verfahren ferner eine Reinigung der zweiten Flüssigkeit mit H₂O₂ vor dem Mischen des CO₂ enthaltenden Gases unter Druck in die zweite Flüssigkeit umfasst.

## Revendications

1. Saturateur de boissons (1) pour fournir une boisson gazeuse (2) comprenant :
unité de génération de CO₂ (10) pour produire un gaz comprenant du CO₂ (25) dans lequel le CO₂ compris dans le gaz (25) est produit par conversion d'un composé organique (23) dans un premier liquide (21) par une cellule photoélectrochimique (22) de l'unité de génération de CO₂₍10), la cellule (22) étant comprise dans le saturateur de boissons et appropriée pour générer le CO₂ et de l'électricité simultanément, dans laquelle cellule (22) le composé organique (23) est converti sous l'influence d'une lumière (24) au moins en CO₂, dans lequel le CO₂ et l'électricité sont générés en fournissant le premier liquide à la cellule photochimique et en exposant la cellule ;
un régulateur de pression (30) agencé pour mettre sous pression le gaz comprenant du CO₂ (25) ; et
une chambre de mélange (40) pour mélanger le gaz comprenant du CO₂ (25) sous pression dans un second liquide (41) pour fournir la boisson gazeuse (2).

2. Saturateur de boissons (1) selon la revendication 1, dans lequel la cellule photoélectrochimique est une cellule photoélectrochimique à base de nano-TiO₂.

3. Saturateur de boissons (1) selon l'une quelconque des revendications précédentes, dans lequel le saturateur de boissons (1) comprend un composant électronique (60), et dans lequel la cellule photoélectrochimique est agencée pour fournir au moins une partie de l'électricité requise par le composant électronique (60).

4. Saturateur de boissons (1) selon l'une quelconque des revendications précédentes, comprenant une source lumineuse (100) agencée pour fournir au moins une partie de la lumière requise par la cellule photoélectrochimique.

5. Saturateur de boissons (1) selon l'une quelconque des revendications précédentes, dans lequel la cellule photoélectrochimique (22) comprend une membrane (200), agencée pour fournir un compartiment anodique (201) et un compartiment cathodique (202), dans lequel la membrane (200) est une membrane échangeuse de protons.

6. Saturateur de boissons (1) selon l'une quelconque des revendications précédentes, comprenant en outre une chambre de stockage de CO₂ (70).

7. Saturateur de boissons (1) selon l'une quelconque des revendications précédentes, comprenant en outre une unité de dosage (80) agencée pour fournir un composé supplémentaire (81) au second liquide (41) ou à la boisson gazeuse (2), et dans lequel le composé supplémentaire (81) est de préférence choisi parmi le groupe constitué d'un parfum, d'un exhausteur de goût, d'un colorant, d'un sucre et d'un minéral.

8. Saturateur de boissons (1) selon l'une quelconque des revendications précédentes, dans lequel la cellule photoélectrochimique (22) est agencée pour générer également du H₂O₂.

9. Procédé, dans lequel le saturateur de boissons (1) selon l'une quelconque des revendications 1 à 8 est appliqué, pour produire une boisson gazeuse (2) comprenant la production d'un gaz comprenant du CO₂ (25) par conversion d'un composé organique (23) dans un premier liquide (21) par une cellule photoélectrochimique (22), la cellule (22) étant appropriée pour générer le CO₂ et de l'électricité simultanément, dans laquelle cellule (22) le composé organique (23) est converti sous l'influence d'une lumière (24) au moins en CO₂, dans lequel le CO₂ et l'électricité sont générés par fourniture du premier liquide à la cellule photochimique et par exposition de la cellule ; et le mélange du gaz comprenant du CO₂ (25) sous pression dans un second liquide (42) pour produire la boisson gazeuse (2).

10. Procédé selon l'une quelconque des revendications 9 et 10, dans lequel le premier liquide comprend un saccharide en tant que composé organique, de préférence l'un ou plusieurs parmi le glucose et le saccharose.

11. Procédé selon l'une quelconque des revendications 9 à 11, dans lequel le second liquide est de l'eau.

12. Procédé selon l'une quelconque des revendications 9 à 12, comprenant en outre la fourniture de lumière d'une source lumineuse à la cellule photoélectrochimique.

13. Procédé selon l'une quelconque des revendications 9 à 13, comprenant en outre le stockage du gaz comprenant du CO₂ sous pression.

14. Procédé selon l'une quelconque des revendications 9 à 14, dans lequel le procédé comprend en outre une purification du second liquide avec du H₂O₂, avant le mélange du gaz comprenant du CO₂ sous pression dans le second liquide.
